# DEMANDE DE BREVET EUROPEEN

(11) **EP 0 838 778 A1**
(43) Date de publication de la demande: **29.04.1998**
(21) Numéro de dépôt: 97402525.6
(22) Date de dépôt: 24.10.1997
(51) Int. Cl.: G06K 13/08

(54) **Dispositif de lecture/écriture de carte du type magnétique ou à puce**

(30) Priorité: 25.10.1996 FR 9613037
(71) Demandeur: Sinet, Maurice, 75017 Paris (FR)
(72) Inventeur: Sinet, Maurice, 75017 Paris (FR)
(74) Mandataire: Dawidowicz, Armand

(57) **Abrégé**

L'invention concerne un dispositif de lecture/écriture de carte telle qu'une carte à puce ou magnétique, présentant un boîtier (1) muni d'une fente (3) d'introduction de la carte (2), renfermant des moyens de lecture et d'écriture de ladite carte (2), des moyens d'amenée et de retrait de la carte (2) à la position de lecture/écriture, comportant un organe de réception (4) de la carte (2), un organe (5) d'entraînement en translation de la carte (2) coopérant avec l'organe de réception (4) pour amener la carte (2) vers, et de, la position de lecture/écriture.

L'invention consiste en ce que l'organe de réception (4) est monté pivotant autour de son axe de fixation (4') dans le boîtier (1) à son extrémité opposée à la fente (3) d'introduction, son autre extrémité venant masquer la fente (3) en position de lecture/écriture de la carte.

Application aux dispositifs de lecture/écriture de cartes.

## Description

La présente invention concerne un dispositif de lecture/écriture d'une carte telle qu'une carte à puce, une carte magnétique, etc... contenant des informations lisibles et modifiables.

Ce type de carte est maintenant couramment utilisé dans des appareils qui fonctionnaient auparavant avec des monnayeurs à pièces ou à jetons tels que les téléphones publics, les distributeurs de boissons, des jeux, des manèges, etc...

Cependant, à ce nouveau type de moyen de paiement s'est greffé un nouveau type de fraude par piratage de la carte dans le dispositif de lecture/écriture. Ainsi, lorsqu'on utilise des cartes à puce, il est toujours possible d'intervenir sur les pastilles de contact de la carte à puce en introduisant des outils appropriés au travers de la fente d'introduction du dispositif.

Afin d'éviter ce genre de fraude, on a proposé des dispositifs de lecture/écriture de carte comportant des moyens d'amenée de la carte à une position de lecture/écriture dans le dispositif tandis qu'un élément de fermeture vient obturer la fente d'introduction du dispositif, empêchant ainsi l'accès à la carte. Ainsi, l'entraînement de la carte peut être effectué par des moyens mécaniques tels qu'une plaque de réception et un rouleau entraîneur (JP-A-04 017088, FR-A-2 477 303) entraînant la carte au-delà de la fente d'introduction derrière laquelle se positionne un élément de fermeture (FR-A-2 477 303).

On a également proposé dans le document EP-A-0 204 620, un dispositif de lecture/écriture de carte dans lequel l'organe de réception de la carte est lié au volet de fermeture et est monté pivotant autour d'un axe de telle sorte que l'entraînement en pivotement du volet pour fermer l'accès après insertion de la carte dans la fente par simple poussée de l'utilisateur, provoque le pivotement de l'organe de réception qui comporte des moyens propres à permettre un déplacement en translation des moyens connecteurs perpendiculairement audit volet de manière à entraîner totalement la carte au-delà de la fente d'introduction au cours du pivotement du volet. La fente en outre n'est alors également plus accessible même après perforation du volet puisqu'elle pivote également.

Cependant, ce type de dispositif nécessite la présence d'une pièce propre à obturer la fente, telle qu'un volet, ainsi que des moyens de commande spécifiques de cette pièce permettant sa mise en place et son retrait. Ceci rend relativement complexes la structure et le fonctionnement des dispositifs de lecture/écriture de carte et augmente par conséquent leur coût de fabrication. De plus, la consommation d'énergie au sein du dispositif est augmentée de par la présence de ces moyens de commande spécifiques des éléments de fermeture.

On a également proposé dans DE-A-34 07 079 un dispositif de lecture/écriture de carte comportant un boîtier pourvu d'une fente et d'un organe de réception de la carte logé derrière cette fente. Lorsqu'on introduit la carte au travers de la fente, celle-ci est reçue par l'organe de réception et vient coopérer avec un élément formant crochet. Ce crochet, sous la poussée d'introduction de la carte, coopère avec un élément qui vient se positionner à l'arrière de la carte ce qui provoque par la suite le pivotement de l'ensemble formé par l'organe de réception, le crochet et ledit élément et provoque également un coulissement d'un volet de verrouillage de manière à obturer la fente d'introduction. Une telle structure se révèle particulièrement complexe.

La présente invention propose un dispositif de lecture/écriture de carte visant à pallier ces inconvénients, en particulier en permettant une obturation de la fente de manière simple et automatique et ne nécessitant pas une consommation d'énergie supplémentaire.

A cet effet, l'invention a pour objet un dispositif de lecture/écriture de carte telle qu'une carte à puce ou magnétique, du type présentant un boîtier muni sur une face d'une fente d'introduction de la carte, ledit boîtier renfermant des moyens d'amenée et de retrait de la carte à une position de lecture/écriture ainsi que des moyens de lecture et d'écriture de ladite carte, lesdits moyens d'amenée et de retrait comportant un organe de réception de la carte introduite au travers de la fente, ledit organe de réception s'étendant dans le boîtier depuis la fente d'introduction vers l'intérieur dudit boîtier, un organe d'entraînement en translation de la carte dans le boîtier coopérant avec l'organe de réception pour amener la carte vers, et de, la position de lecture/écriture, caractérisé en ce que l'organe de réception de la carte est monté pivotant autour de son axe de fixation dans le boîtier à son extrémité opposée à la fente d'introduction tandis que son autre extrémité vient masquer la fente d'introduction en position de lecture/écriture de la carte sur ledit organe de réception.

Ainsi, on obtient une mise en place de la carte dans le dispositif de lecture/écriture avec des moyens d'amenée et de retrait de la carte à la position de lecture/écriture, le pivotement de l'un des organes permettant en outre de condamner l'accès à ladite carte.

Selon une forme de réalisation préférée, l'organe de réception est un plateau s'étendant à l'intérieur du boîtier depuis la fente d'introduction du boîtier de telle sorte qu'une carte introduite au travers de ladite fente repose sur le plateau. L'extrémité du plateau opposée à la fente d'introduction est montée dans le boîtier pivotante autour de son axe de fixation. Le pivotement du plateau autour de son axe de fixation permet de positionner l'autre extrémité du plateau en regard de la fente d'introduction empêchant ainsi l'accès à l'intérieur du boîtier au travers de ladite fente.

Dans le boîtier, au-dessus du plateau est installé l'organe d'entraînement en translation de la carte dans le boîtier. Cet organe d'entraînement en translation est constitué par un rouleau entraîné en rotation sous lequel se glisse la carte qui repose sur le plateau de réception. L'intervalle entre le plateau et le rouleau est tel que la carte est introduite à frottement entre les deux. Ainsi, l'entraînement en rotation du rouleau, de préférence par un moteur électrique, pouvant être muni de moyens d'entraînement connus en soi du type vis sans fin/crémaillère ou vis sans fin sur l'arbre moteur et pignon denté, permet d'entraîner en rotation le rouleau dans deux sens. Selon le premier sens de rotation, la carte sur le plateau est amenée vers la position de lecture/écriture dans le boîtier et selon le second sens de rotation du rouleau, la carte est retirée de cette position de lecture/écriture vers l'extérieur du boîtier.

De préférence, de manière à faciliter l'insertion de la carte sous le rouleau d'entraînement en rotation, l'axe portant ledit rouleau d'entraînement est monté à jeu angulaire limité entre deux positions angulaires, par rapport au mécanisme d'entraînement et est rappelé par un moyen de rappel tel qu'un ressort de telle sorte que dans une course initiale d'introduction de la carte, celle-ci entraîne le rouleau d'entraînement se trouvant à la première position angulaire sans effet de friction jusqu'à atteindre la seconde position angulaire, après quoi le rouleau d'entraînement est entraîné par le moteur et continue en conséquence la translation de la carte vers la position de lecture/écriture.

Lorsque les moyens d'entraînement entre le moteur et le rouleau d'entraînement, connus en soi sont un pignon denté et une vis sans fin sur l'arbre moteur, dans ce cas, l'axe est monté à jeu angulaire limité dans le moyeu du pignon denté.

Afin de permettre la fermeture de la fente et, par conséquent, le pivotement du plateau en position de lecture/écriture, le dispositif comporte un organe d'entraînement en pivotement du plateau.

Cet organe d'entraînement en pivotement du plateau est constitué par un rouleau monté libre en rotation autour de son axe de fixation dans le boîtier et interposé sur le trajet de la carte qui, entraînée en translation vers la position de lecture/écriture dans le boîtier et en saillie par rapport au plateau vient buter contre ledit rouleau.

Sous l'effet de l'avancée de la carte et du fait que le plateau est monté libre de pivoter autour de son axe de fixation, la carte bascule et glisse sous le rouleau en entraînant le plateau en pivotement autour de son axe de fixation.

En résultat, le plateau pivote et ce pivotement est tel que l'extrémité du plateau est positionnée en regard de la fente d'introduction du boîtier, constituant ainsi un volet de fermeture de la fente.

La carte est donc amenée jusqu'à sa position de lecture/écriture dans le boîtier tandis que l'accès par la fente d'introduction est condamné.

Pour sortir la carte hors du boîtier, le rouleau d'entraînement en translation de la carte est entraîné en rotation selon le second sens de rotation, la carte se désengageant de dessous le rouleau d'entraînement en pivotement du plateau. Une fois la carte libérée, le plateau pivote vers sa position d'origine et libère l'accès à la fente d'introduction, la carte pouvant être entraînée en translation hors du boîtier.

De préférence, le dispositif selon l'invention comporte des moyens de commande du moteur dans le second sens de rotation, déclenchés par une électronique de lecture/écriture de la carte.

En outre, il comporte également un organe de détection, reconnaissant la position d'une carte introduite sous le rouleau d'entraînement en translation et propre à déclencher un signal de commande de rotation dudit rouleau dans le premier sens de rotation ainsi qu'un organe de détection reconnaissant le passage de la carte lors de son retour produit par la rotation du moteur dans le second sens et déclenchant l'envoi d'un signal d'arrêt de la rotation du rouleau en position d'extraction manuelle de la carte.

Il est également avantageux de prévoir un organe de détection de la carte en position lecture/écriture, ledit organe de détection envoyant un signal d'arrêt au moteur actionnant le rouleau d'entraînement en translation dans le premier sens de rotation.

On limite ainsi la consommation d'énergie au minimum nécessaire à l'amenée et au retrait de la carte de manière correcte.

Selon une variante de réalisation de l'invention, l'organe de réception est constitué par un plateau dont l'extrémité opposée à la fente d'introduction est montée pivotante sur l'axe de fixation dans le boîtier d'un rouleau monté libre en rotation sur ledit axe. Cet axe de fixation est monté mobile en translation dans le boîtier de telle sorte que, lorsqu'une carte introduite dans le boîtier vient buter contre l'organe d'entraînement en pivotement de l'organe de réception, le déplacement linéaire de l'axe de fixation du rouleau à l'extrémité du plateau, sous l'effet du basculement de la carte sous ledit organe d'entraînement en pivotement, provoque le pivotement du plateau.

De préférence, le rouleau d'extrémité du plateau est en regard du rouleau d'entraînement en translation. On limite ainsi les frottements portés sur la carte, le rouleau d'extrémité du plateau étant entraîné en rotation par l'avancée de la carte.

Afin de favoriser le pivotement de l'organe de réception en retour vers sa position initiale, le dispositif peut comporter un organe de rappel élastique tel qu'un ressort qui, lorsque l'organe de réception pivote lors de l'amenée de la carte à la position de lecture/écriture, est comprimé et lorsque la carte est retirée, tend à recouvrir sa forme initiale et contribue à ramener l'organe de réception vers sa position d'origine.

L'invention sera maintenant décrite plus en détail en référence à un exemple de réalisation de l'invention à l'aide du dessin annexé dans lequel :

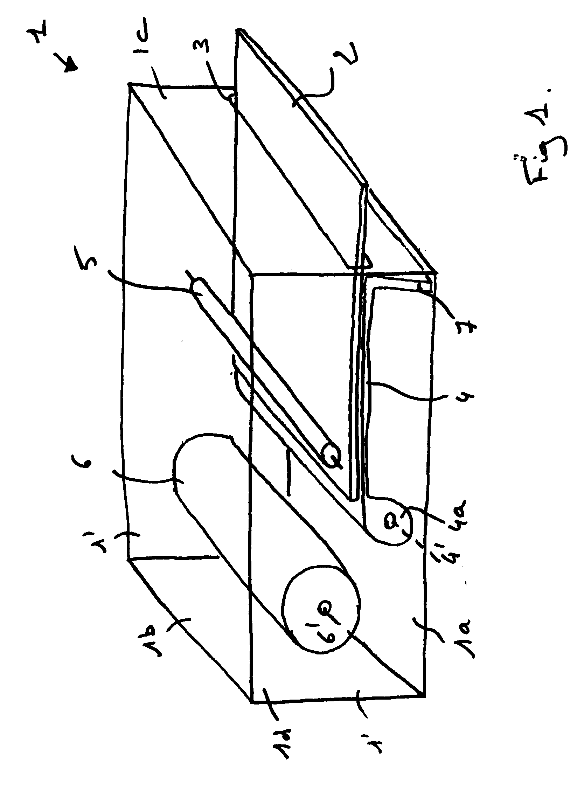

la figure 1 représente une vue schématique en élévation latérale d'un dispositif selon l'invention ; et

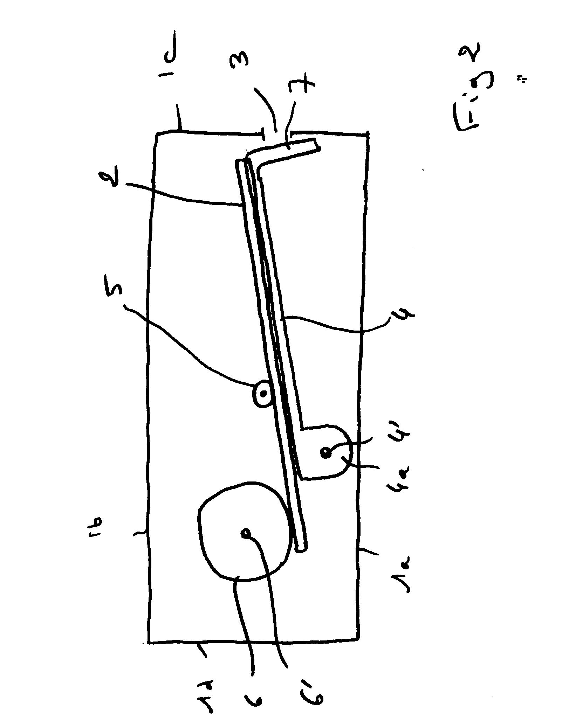

la figure 2 représente une vue en coupe latérale d'un dispositif selon la figure 1, la carte étant en position de lecture/écriture.

Le dispositif de lecture/écriture selon l'invention comporte un boîtier 1 de forme parallélépipédique présentant un fond la, un couvercle 1b, deux parois latérales 1', une paroi avant lc et une paroi arrière 1d. Pour des raisons de clarté, seuls les contours du boîtier 1 sont représentés.

Le boîtier 1 comporte des moyens d'amenée et de retrait vers une position de lecture/écriture d'une carte 2 introduite au travers d'une fente 3 prévue sur la paroi avant lc du boîtier 1.

Les moyens d'amenée sont constitués d'un plateau de réception 4 s'étendant dans le boîtier 1 derrière la fente 3 de telle sorte qu'une carte 2 introduite au travers de la fente 3 repose sur le plateau 4.

Le plateau 4 est fixé au boîtier 1 à son extrémité opposée à la fente d'introduction 3 de manière à pouvoir être entraîné en pivotement autour de son axe de fixation 4' entre les deux parois latérales 1' du boîtier 1. A cet effet, le plateau 4 comporte à cette extrémité deux pattes latérales 4a reposant contre le fond la du boîtier 1 tandis que l'autre extrémité du plateau 4 est courbée de manière à former une patte 7 en appui contre le fond la. La hauteur des pattes 4a et de la patte 7 positionne le plateau 4 au niveau de la fente 3 d'introduction de carte et la patte 7 sert de volet de fermeture à ladite fente (3).

Lorsqu'on introduit la carte 2 au travers de la fente 3, la carte 2 est reçue sur le plateau 4 et glisse sur celui-ci sous l'effet d'une poussée exercée par l'utilisateur du dispositif de lecture/écriture de carte.

Un rouleau entraîné en rotation 5 s'étendant entre les deux parois latérales 1' du boîtier 1 est positionné au-dessus du plateau 4 de telle sorte que l'intervalle d défini entre le rouleau 5 et le plateau 4 permet l'insertion à frottement de la carte 2 entre les deux. Ce rouleau 5 est entraîné en rotation sous l'effet d'un moteur électrique comportant un mécanisme d'entraînement du type vis sans fin/crémaillère ou vis sans fin/pignon denté relié audit rouleau 5.

De préférence, le rouleau 5 comporte un revêtement en un matériau souple, légèrement élastiquement déformable de manière à faciliter l'insertion de la carte 2 entre le plateau 4 et ledit rouleau 5.

De préférence, le dispositif comporte un organe de détection (non représenté) propre à reconnaître la position d'une carte 2 introduite sous le rouleau 5 de telle sorte qu'un signal est envoyé vers le moteur électrique, qui, actionné, commande la rotation du rouleau 5 selon le premier sens de rotation tel que, par frottement, il entraîne la translation de la carte 2 sur le plateau 4 vers la position de lecture/écriture à l'intérieur du boîtier 1.

Sous l'effet de l'entraînement en translation, la carte 2 est complètement introduite dans le boîtier 1 et fait saillie hors du plateau 4 dans le boîtier 1.

Un organe d'entraînement en pivotement du plateau 4 est positionné sur le trajet de la carte 2. Cet organe, constitué par un rouleau rotatif 6 s'étend entre les parois 1' du boîtier 1 et est monté libre en rotation autour de son axe de fixation 6'.

La carte 2, maintenue sur le plateau 4 par le rouleau d'entraînement en translation 5 vient buter contre le rouleau 6 interposé sur son trajet vers la position de lecture/écriture. Sous l'effet du rouleau 5, la carte 2 continue à avancer contre le rouleau 6 et, le plateau 4 étant libre de pivoter autour de son axe de fixation, la carte 2 entraîne en rotation le rouleau 6 de manière à glisser dessous ce qui entraîne le plateau 4 en pivotement autour de son axe de fixation 4'. Lorsque le plateau 4 pivote, la patte 7 vient en regard de la fente d'introduction 3 et obture ladite fente 3.

La carte 2 est ainsi amenée à la position de lecture/écriture par des moyens de lecture et des moyens d'écriture (non représentés) dans le dispositif. De préférence, on prévoit un organe de détection de la carte 2 (non représenté) en position de lecture/écriture de manière à envoyer un signal d'arrêt au moteur électrique actionnant le rouleau 5.

Une fois que les opérations à effectuer sur la carte 2 ont été réalisées, la carte 2 peut être retirée. A cet effet, le moteur électrique est actionné de manière à entraîner le rouleau 5 en rotation dans le sens inverse de manière à permettre le retrait de la carte 2. Le dispositif comporte à cet effet des moyens de commande du moteur (non représenté) dans le second sens de rotation, lesdits moyens de commande étant déclenchés par une électronique de lecture/écriture de la carte 2.

Dès que la carte 2 est dégagée du rouleau 6, le plateau 4 est libre de pivoter dans le sens contraire pour revenir à sa position d'origine libérant ainsi la fente d'introduction 3 au travers de laquelle la carte 2 est entraînée en translation pour son retrait. Un organe de détection (non représenté) reconnaissant le passage de la carte 2 lors de son retour, déclenche un signal d'arrêt de la rotation du rouleau 5 lorsque la carte 2 est en position d'extraction manuelle, c'est-à-dire quelle est en saillie au travers de la fente 3 hors du boîtier 1.

Le dispositif de lecture/écriture d'une carte selon l'invention permet de réaliser de manière simple la condamnation de la fente d'introduction et ce, de manière énergétiquement économique puisqu'il n'est pas nécessaire de fournir une énergie autre que l'énergie nécessaire aux moyens d'amenée et de retrait de la carte.

## Revendications

1. Dispositif de lecture/écriture de carte telle qu'une carte à puce ou magnétique, du type présentant un boîtier (1) muni sur une face (1c) d'une fente (3) d'introduction de la carte (2), ledit boîtier (1) renfermant des moyens d'amenée et de retrait de la carte (2) à une position de lecture/écriture ainsi que des moyens de lecture et d'écriture de ladite carte (2), lesdits moyens d'amenée et de retrait comportant un organe de réception (4) de la carte (2) introduite au travers de la fente (3), ledit organe de réception (4) s'étendant dans le boîtier (1) depuis la fente (3) d'introduction vers l'intérieur dudit boîtier (1), un organe (5) d'entraînement en translation de la carte (2) dans le boîtier (1) coopérant avec l'organe de réception (4) pour amener la carte (2) vers, et de, la position de lecture/écriture,
caractérisé en ce que l'organe de réception (4) est monté pivotant autour de son axe de fixation (4') dans le boîtier (1) à son extrémité opposée à la fente (3) d'introduction tandis que son autre extrémité vient masquer la fente (3) d'introduction en position de lecture/écriture de la carte sur ledit organe de réception (1).

2. Dispositif selon la revendication 1,
caractérisé en ce que l'organe de réception est un plateau (4) fixé aux parois latérales (1') du boîtier (1) par des pattes latérales (4a), son extrémité proche de la fente (3) étant recourbée de manière à former une patte (7) en appui contre le fond (1a) du boîtier (1), ladite patte (7) servant de volet de fermeture pour la fente (3), en position de lecture/écriture de la carte sur ledit plateau (4).

3. Dispositif selon la revendication 1,
caractérisé en ce que l'organe de réception est constitué par un plateau dont l'extrémité opposée à la fente d'introduction est montée pivotante sur l'axe de fixation dans le boîtier d'un rouleau monté libre en rotation, ledit axe de fixation étant monté mobile en translation dans le boîtier.

4. Dispositif selon l'une des revendications 1 à 3,
caractérisé en ce que l'organe d'entraînement en translation est un rouleau (5) entraîné en rotation, installé au-dessus de l'organe de réception ou plateau (4), la carte (2) reposant sur le plateau (4) étant introduite à frottement entre ledit rouleau (5) et le plateau (4).

5. Dispositif selon la revendication 4,
caractérisé en ce que le rouleau (5) présente un revêtement extérieur en un matériau élastiquement déformable.

6. Dispositif selon l'une des revendications 4 et 5,
caractérisé en ce que le rouleau (5) est entraîné en rotation par un moteur électrique entraînant le rouleau (5) selon un premier sens de rotation pour l'amenée de la carte (2) vers la position de lecture/écriture et selon un second sens de rotation pour le retour de la carte (2) depuis ladite position.

7. Dispositif selon la revendication 6,
caractérisé en ce qu'il comporte des moyens de commande du moteur dans le second sens de rotation, déclenchés par une électronique de lecture/écriture de la carte,
un organe de détection, reconnaissant la position d'une carte (2) introduite sous le rouleau (5) et propre à déclencher un signal de commande de rotation du rouleau (5) dans le premier sens de rotation,
un organe de détection reconnaissant le passage de la carte lors de son retour produit par la rotation du moteur dans le second sens et déclenchant l'envoi d'un signal d'arrêt de la rotation du rouleau (5) en position d'extraction manuelle de la carte (2),
ainsi qu'un organe de détection de la carte (2) en position lecture/écriture, ledit organe de détection envoyant un signal d'arrêt au moteur actionnant le rouleau (5) dans le premier sens de rotation.

8. Dispositif selon l'une des revendications 1 à 7,
caractérisé en ce qu'il comporte un organe d'entraînement en pivotement de l'organe de réception (4) constitué par un rouleau (6) monté dans le boîtier (1) libre en rotation autour de son axe de fixation (6') et interposé sur le trajet de la carte (2), ladite carte (2) entraînée en translation en saillie hors du plateau (4) venant buter contre le rouleau (6) et basculant sous ledit rouleau (6) en entraînant l'organe de réception (4) en pivotement autour de son axe (4').

9. Dispositif selon l'une des revendications 1 à 8,
caractérisé en ce qu'il comporte un organe de rappel élastique tel qu'un ressort qui, lorsque l'organe de réception(4) pivote lors de l'amenée de la carte (2) à la position de lecture/écriture, est comprimé et lorsque la carte (2) est retirée, tend à recouvrir sa forme initiale et contribue à ramener l'organe de réception (4) vers sa position d'origine.

10. Dispositif selon l'une des revendications 4 à 9,
caractérisé en ce que l'axe portant le rouleau d'entraînement (5) est monté à jeu angulaire limité entre deux positions angulaires, par rapport au mécanisme d'entraînement et est rappelé par un moyen de rappel tel qu'un ressort de telle sorte que, dans une course initiale d'introduction de la carte (2), celle-ci entraîne le rouleau d'entraînement (5) se trouvant à la première position angulaire sans effet de friction jusqu'à atteindre la seconde position angulaire, après quoi le rouleau d'entraînement (5) est entraîné par le moteur et continue en conséquence la translation de la carte (2) vers la position de lecture/écriture.

11. Dispositif selon la revendication 10,
caractérisé en ce que, lorsque les moyens d'entraînement entre le moteur et le rouleau d'entraînement (5), connus en soi sont un pignon denté et une vis sans fin sur l'arbre moteur, l'axe est monté à jeu angulaire limité dans le moyeu du pignon denté.
